# EUROPEAN PATENT APPLICATION

(11) **EP 1 089 240 A2**
(43) Date of publication of application: **04.04.2001**
(21) Application number: 00308230.2
(22) Date of filing: 20.09.2000
(51) Int. Cl.: G07F 13/06

(54) **Automatic beverage vending machine having a cartridge transfer mechanism for moving a material cartridge from a cartridge storage portion to a beverage extracting device**

(30) Priority: 30.09.1999 JP 27824399; 30.09.1999 JP 27824499; 30.09.1999 JP 27886099
(71) Applicant: SANDEN CORPORATION, Isesaki-shi Gunma 372 (JP)
(72) Inventor: Sato, Takeshi, c/o Sanden Corporation, Isesaki-shi, Gunma 372 (JP); Matsuo, Takao, Sanden Corporation, Isesaki-shi, Gunma 372 (JP)
(74) Representative: Haley, Stephen

(57) **Abstract**

An automatic beverage vending machine is provided a plurality of cartridge storing portions (10) each for storing a plurality of cartridges each of which contains a powdery beverage material therein. A cartridge transferring mechanism (40) transfers a particular one of the cartridges from the cartridge storing portions to a beverage extracting position. A beverage extracting device (20) supplies hot water into the particular cartridge at the beverage extracting position to extract a beverage from the powdery beverage material.

## Description

The present invention relates to an automatic beverage vending machine for extracting a beverage from a single cup quantity of a powdery beverage material, such as coffee grinds or tea leaves, sealed in a cartridge and pouring the beverage into a cup for service to a customer.

A conventional automatic beverage vending machine of the type is disclosed in Japanese Unexamined Patent Publication (JP-A) No. H07-37158. In the automatic beverage vending machine, a single cup quantity of, i.e., a dose of a powdery beverage material is preliminarily sealed in a package having a filtering function, which may hereinafter be referred to as a filtering package. It is noted here that the term "a single cup quantity" means a predetermined quantity required to prepare a single cup of beverage. A number of such packages are successively stacked in a single array and stored in a columnar package storage portion to be kept in a stand-by state until a vending request signal is received. In response to the vending request signal, a lowermost one of the packages is released from the package storage portion and transferred to a beverage extracting device. In the beverage extracting device, hot water is supplied into the package from the above to extract a beverage from the powdery beverage material. The beverage thus extracted is poured into a cup for service to a customer. After extracting the beverage, the package is discarded in a waste package receptacle.

In the above-mentioned automatic beverage vending machine, a single cup quantity of the powdery material is individually sealed in each package. Therefore, the quality of the powdery material can easily be maintained and the beverage can be uniformly finished in every vending operation.

However, the above-mentioned automatic beverage vending machine comprises only one package storage portion. This means that the packages with only one kind of powdery material enclosed therein can be stored. Therefore, no more than one kind of beverage can be extracted and served.

The packages are transferred from the package storage portion to the beverage extracting device by the use of an inclined chute for sliding the packages. This structure is not applicable, for example, to a case where it is assumed that a number of package storage portions are arranged in columns and rows on a horizontal plane.

It is therefore an object of the present invention to provide an automatic beverage vending machine which is capable of vending a plurality of kinds of beverages by the use of a plurality of kinds of powdery materials sealed in cartridges.

Other objects of the present invention will become clear as the description proceeds.

According to the present invention, there is provided an automatic beverage vending machine which comprises a beverage extracting position, a plurality of cartridge storing portions each for storing a plurality of cartridges each of which contains a powdery beverage material therein, a cartridge transferring mechanism coupled to the beverage extracting position and the cartridge storing portions for transferring, as a particular cartridge, one of the cartridges from the cartridge storing portions to the beverage extracting position, and a beverage extracting device coupled to the beverage extracting position for supplying hot water into the particular cartridge to extract a beverage from the powdery beverage material.

In the Drawings
Fig. 1 is a perspective view showing an internal structure of an automatic beverage vending machine according to a first embodiment of the present invention;
Fig. 2 is a block diagram of a control system for a cartridge transfer mechanism illustrated in Fig. 1;
Figs. 3 through 5 are plan views for describing an operation of the cartridge transfer mechanism illustrated in Fig. 1;
Figs. 6A through 6C are views for describing a step of taking out a cartridge from a cartridge storage column illustrated in Fig. 1;
Fig. 7 is a schematic view showing a beverage extracting device illustrated in Fig. 1;
Fig. 8 is a block diagram of a control system for the beverage extracting device shown in Fig. 7;
Fig. 9 is a partially sectional front view showing a main part of the beverage extracting device illustrated in Fig. 7;
Fig. 10 is a time chart for describing an example of an operation of the beverage extracting device shown in Fig. 7; and
Fig. 11 is a time chart for describing another example of the operation of the beverage extracting device shown in Fig. 7.

### Description of Preferred Embodiment:

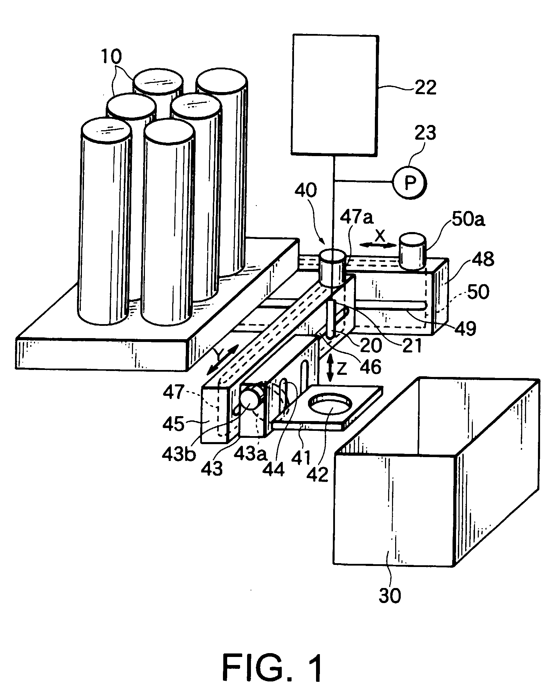

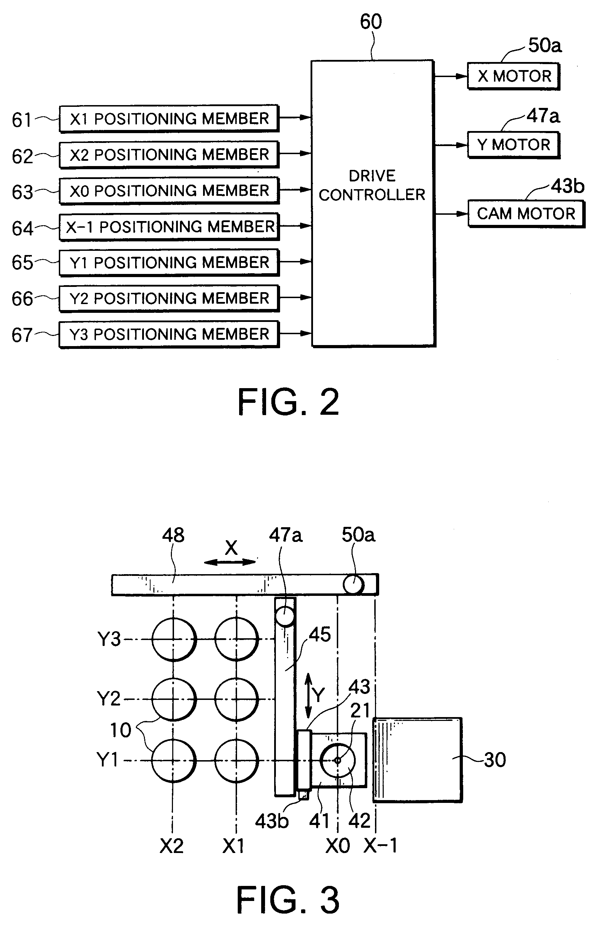

Referring to Figs. 1 and 2, description will be made about an automatic beverage vending machine according to one embodiment of the present invention.

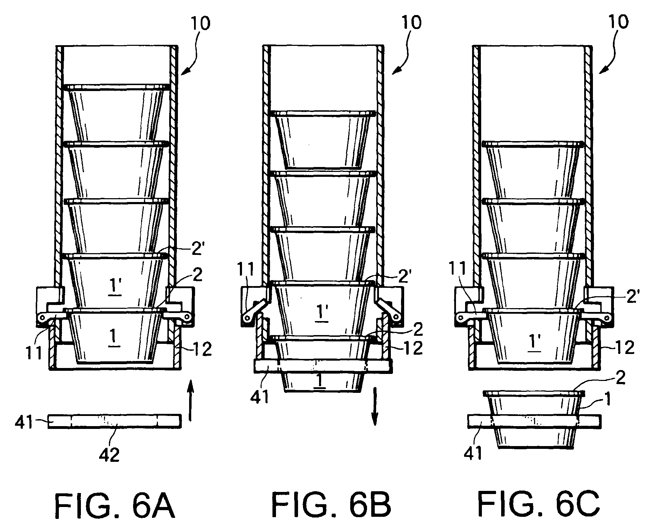

The automatic beverage vending machine is provided in its interior with a plurality of cartridge storage columns 10, six in number, for storing a plurality of filtering cartridges (hereinafter simply called "cartridges") each of which contains a single cup quantity of powdery beverage material preliminarily sealed therein, a beverage extracting device 20 for supplying hot water into the cartridges through a hot water supply nozzle 21 and extracting the beverage from the bottom, a waste cartridge receptacle 30 for discarding the cartridges 1 after extracting the beverage, and a cartridge transfer mechanism 40 for transferring the cartridges 1 taken out from the cartridge storage columns 10 to the beverage extracting device 20 and the waste cartridge receptacle 30. The beverage extracting device 20 comprises the hot water supply nozzle 21 for supplying the cartridges 1 with the hot water as mentioned above, a hot water tank 22 for reserving the hot water, and an air pump 23 for supplying the air. The hot water supply nozzle 21 communicates with the hot water tank 22 and the air pump 23 and is fixed with its end portion facing downward. It is to be noted that the cartridges are designated by reference numerals 1 and 1' in Figs. 6A-6C.

The cartridge storage columns 10, six in number, are arranged on a horizontal plane in two rows and in three rows in an X-axis direction and in a Y-axis direction, respectively. Within the cartridge storage columns 10, six groups of the cartridges 1 with six different kinds of powdery materials sealed therein are stored, respectively. In each of the cartridge storage columns 10, the cartridges 1 are successively stacked in a single array in the manner illustrated in Figs. 6A-6C.

The cartridge transfer mechanism 40 includes a cartridge receiving table 41 for receiving and holding each of the cartridges 1 in an opening 42 formed therein, a movable elevating member 43 for supporting the cartridge receiving table 41 through two arms (not shown) to be movable in a vertical direction, a movable Y-axis transfer member 45 for transferring the movable elevating member 43 in the Y-axis direction, and a fixed X-axis transfer member 48 for transferring the movable Y-axis transfer member 45 in parallel to the X-axis direction.

The movable elevating member 43 contains a cam mechanism 43a for vertically moving the above-mentioned two arms along a pair of Z-axis guide grooves 44. The cam mechanism 43a serves to support the cartridge receiving table 41 on a peripheral side surface of a cam plate (not shown) and to vertically move the cartridge receiving table 41 by rotating the cam plate by a cam motor 43b. The cartridge receiving table 41 is adapted to rest at either one of a lowermost position and an uppermost position in the Z-axis direction with respect to the movable elevating member 43. The movable elevating member 43 may be called an elevating mechanism. It is noted here that the cartridge receiving table 41 may be vertically moved by the use of other appropriate mechanisms such as a rack/pinion mechanism instead of the cam mechanism.

Within the movable Y-axis transfer member 45, a belt mechanism 47 is provided to transfer the movable elevating member 43 along a Y-axis guide groove 46. The belt mechanism 47 includes a pair of rollers (not shown) arranged in the vicinity of opposite ends of the movable Y-axis transfer member 45 in the Y-axis direction, an endless belt (not shown) wound around the rollers to extend therebetween, and a Y motor 47a for driving one of the rollers. The movable elevating member 43 is integrally coupled to a part of the above-mentioned endless belt. The Y-axis transfer member 45 may be called a Y-axis transfer mechanism.

The fixed X-axis transfer member 48 is fixedly disposed at a predetermined position. The fixed X-axis transfer member 48 contains a known belt mechanism 50 similar to that of the movable Y-axis transfer member 45 and driven by an X motor 50a. By the use of the belt mechanism 50, the movable Y-axis transfer member 45 can be transferred along an X-axis guide groove 49 in parallel thereto. The fixed X-axis transfer member 48 may be called an X-axis transfer mechanism. It is noted here that the movable elevating member 43 and the movable Y-axis transfer member 45 may be transferred by the use of other appropriate mechanisms such as a rack/pinion mechanism, a chain/sprocket mechanism, and a fluid pressure mechanism, instead of the belt mechanism.

Referring to Figs. 2 through 5 in addition, the description will be made about an operation of the cartridge transferring mechanism 40. It is assumed that X1 and X2 represent X-coordinate positions on virtual lines passing through centers of the cartridge storage columns 10 in a first row (the right row) and a second row (the left row) in the X-axis direction, respectively. Likewise, it is assumed that Y1, Y2, and Y3 represent Y-coordinate positions on virtual lines passing through centers of the cartridge storage columns 10 in a first row (lower row), a second row (middle row), and a third row (upper row) in the Y-axis direction, respectively.

The hot water supply nozzle 21 is located at X0 on the right side of X1 in the X-axis direction and at Y1 in the Y-axis direction. Thus, the hot water supply nozzle 21 is located at a position depicted by (X0, Y1). The cartridge transfer mechanism 40 discards the cartridges 1 after extracting the beverage into the waste cartridge receptacle 30 at a discarding position defined by X-1 on the right side of X0 in the X-axis direction and Y1 in the Y-axis direction. Thus, the discarding position is depicted by (X-1, Y1).

The X motor 50a of the fixed X-axis transfer member 48, the Y motor 47a of the movable Y-axis transfer member 45, and the cam motor 43b of the movable elevating member 43 are controlled by a drive controller 60 comprising a microcomputer. When the X motor 50a is driven under control of the drive controller 60, the fixed X-axis transfer member 48 transfers the movable Y-axis transfer member 45 in the X-axis direction. The movable Y-axis transfer member 45 is stopped when the center of the opening 42 of the cartridge receiving table 41 coincides with any one of X1, X2, X0, and X-1 in the X-axis direction. The above-mentioned stopping operation is carried out in the following manner. The fixed X-axis transfer member 48 and the movable Y-axis transfer member 45 are provided with an X1 positioning member 61, an X2 positioning member 62, an X0 positioning member 63, and an X-1 positioning member 64. Each of these positioning members detects the position of the movable Y-axis transfer member 45 to produce a movable Y-axis transfer member detection signal. In response to the movable Y-axis transfer member detection signal, the drive controller 60 stops the X motor 50a.

For example, each of the positioning members 61 through 64 comprises a microswitch (not shown) arranged on the side surface of the movable Y-axis transfer member 45 which is faced to the fixed X-axis transfer member 48, and a protruding portion (not shown) formed on the fixed X-axis transfer member 48 at each of the positions X1, X2, X0, and X-1 to be brought into contact with the above-mentioned microswitch. When the microswitch is brought into contact with one protruding portion at one of the positions X1, X2, X0, and X-1 as a contacting position, a position detection signal representative of the contacting position is produced and supplied to the drive controller 60 for collation with an X-axis position indicated by the vending request signal. Alternatively, use may be made of a light-emitting/receiving sensor. Further alternatively, the drive controller 60 may memorize the rotation speed, i.e., the number of rotation of the motor, which corresponds to a predetermined moving distance of the movable Y-axis transfer member 45.

The movable Y-axis transfer member 45 stops the movable elevating member 43 when the center of the opening 42 of the cartridge receiving table 41 reaches any one of the positions Y1, Y2, and Y3, in the manner similar to that mentioned in conjunction with the fixed X-axis transfer member 48. The stopping operation is carried out by the use of a Y1 positioning member 65, a Y2 positioning member 66, and a Y3 positioning member 67 implemented by the above-mentioned microswitch or the like.

Next, the description will be made about the state of use of the automatic vending machine of this invention. It is assumed here that the beverage is extracted from the cartridge 1 of the cartridge storage column 10 positioned at (X2, Y2).

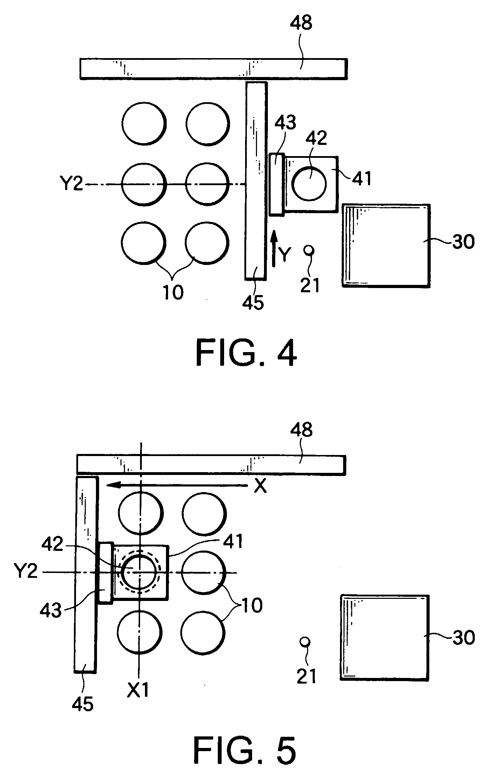

In the standby state waiting the vending request signal, the cartridge storage table 41 rests on a standby position, specifically, at a position (X0, Y1) on the horizontal plane to be concentric with the hot water supply nozzle 21 as shown in Fig. 3 and at the lowermost level of the movable elevating member 43 in a Z-axis direction as shown in Fig. 1. It is noted here that the standby position may be a different position. In the above-mentioned standby state, it is assumed that the drive controller 60 receives the vending request signal. In this event, the movable elevating member 43 is at first transferred in the Y-axis direction by the movable Y-axis transfer member 45 to the position Y2 (see Fig. 4). Next, the movable Y-axis transfer member 45 is transferred in the X-axis direction by the fixed X-axis transfer member 48 to the position X2 (see Fig. 5). It is noted here that the above-mentioned transferring operations in the X-axis and the Y-axis directions may be simultaneously carried out.

As a result of the above-mentioned operation, the opening 42 of the cartridge receiving table 41 reaches a position exactly under the cartridge storage column 10 at the position (X2, Y2) to be concentric therewith, as shown in Fig. 6A. Herein, a lowermost one of the cartridges 1 within the cartridge storage column 10 is taken out in the following manner. Specifically, the lowermost cartridge 1 within the cartridge storage column 10 is supported with its flange 2 engaged by a plurality of claw members 11 (Fig. 6A). When the cartridge receiving table 41 is elevated by the movable elevating member 43 from the above-mentioned state, an outer cylindrical member 12 arranged around the lower part of the cartridge storage column 10 is pushed upward by the cartridge receiving table 41. As a result, the claw members 11 are forced by the upper end of the outer cylindrical member 12 to be released from the flange 2 of the cartridge 1 (Fig. 6B). Thus, the lowermost cartridge 1 falls down to be received as a particular cartridge in the opening 42 of the cartridge receiving table 41. Subsequently, as the cartridge receiving table 41 is lowered by the movable elevating member 43, the outer cylindrical member 12 is also lowered. The claw members 11 is urged by an elastic member such as a spring to return to the initial position and then support the flange 2' of another cartridge 1' which has been arranged next to and just above the cartridge 1 (Fig. 6C). In this case, a combination of the claw members 11, the outer cylindrical member 12, and the cartridge receiving table 41 forms a cartridge dispensing mechanism which will later be designated by a reference numeral 31. Alternatively, the cartridge dispensing mechanism may comprise a plurality of locking members activated by, for example, a solenoid to hold and release the cartridge.

Subsequently, the cartridge 1 held as the particular cartridge by the cartridge receiving table 41 follows the above-mentioned transferring operation in the reverse order and is transferred to the position (X0, Y1) to be concentric with the hot water supply nozzle 21. Thereafter, the cartridge 1 is elevated. As a result of elevation of the cartridge 1, the end portion of the hot water supply nozzle 21 is inserted into the cartridge 1. Then, the hot water supplied from the hot water tank 22 is injected through the hot water supply nozzle 21 into the cartridge 1 to extract a predetermined beverage. The cartridge 1 after extracting the beverage is moved down at the position (X0, Y1) and then transferred to the position (Y1, X-1) to be discarded in the waste cartridge receptacle 30. In order to discard the cartridge 1 into the waste cartridge receptacle 30, the cartridge receiving table 41 may comprise two half-split members which are separated from each other at the position (X-1, Y1) to discard the cartridge 1 into the waste cartridge receptacle 30. Alternatively, the cartridge receiving table 41 may be turned over at the position (X-1, Y1). After the cartridge is discarded, the cartridge receiving table 41 is returned to the standby position (X0, Y1).

In the above-mentioned automatic beverage vending machine, it is possible to vend a plurality of kinds of beverages if the cartridges with different kinds of powdery materials are stored in the cartridge storage portions, respectively. In addition, if a plurality of cartridge storage portions are arranged on the horizontal plane in a matrix fashion, it is possible to minimize the space occupied by the cartridge storage portions within the interior of the machine.

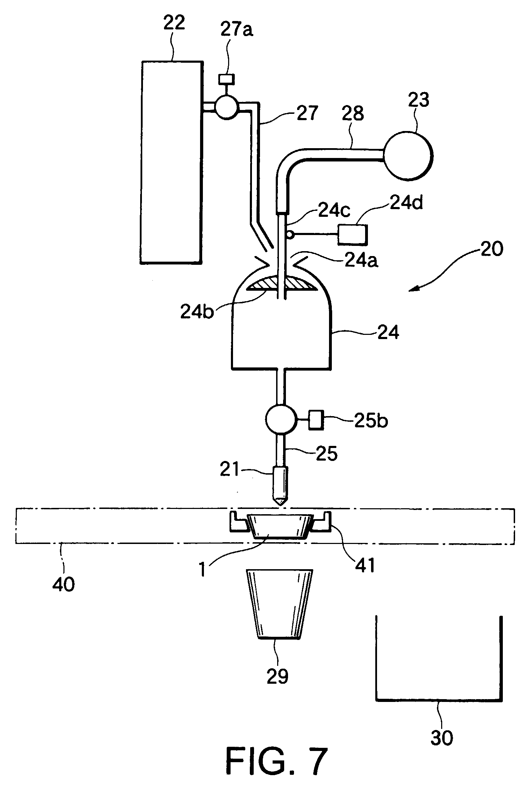

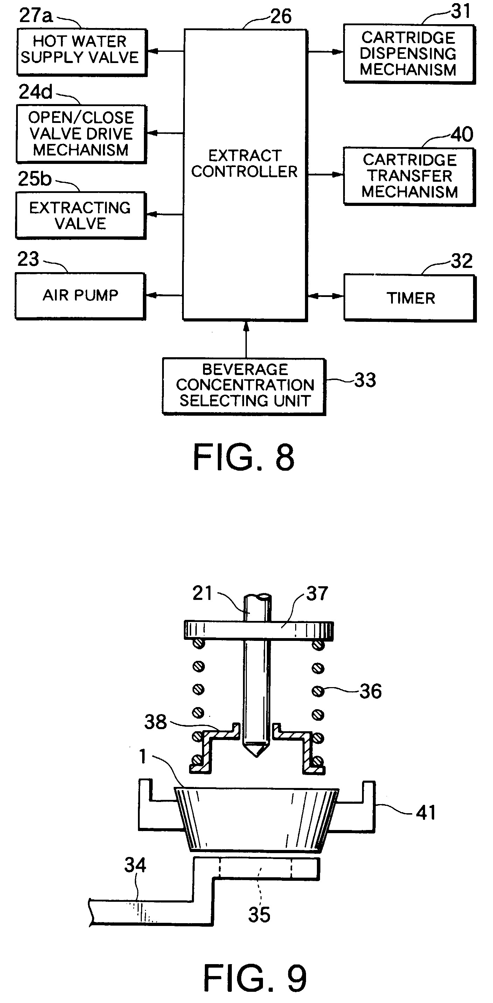

Next referring to Figs. 7 and 8, the description will be made in detail about the beverage extracting device 20.

The beverage extracting device 20 comprises an extracting unit 24 adapted to reserve the hot water therein, a hot water pipe 25 for supplying the cartridge 1 with the hot water within the extracting unit 24, and an extract controller 26 for controlling an extracting operation.

The extracting unit 24 has an opening portion 24a formed in its upper surface. The opening portion 24a is opened and closed by an open/close valve 24b arranged within the extracting unit 24. The open/close valve 24b is attached to a shaft 24c movable in the vertical direction. The shaft 24c is vertically moved by an open/close valve drive mechanism 24d comprising a solenoid or the like. Specifically, when the open/close valve 24b is elevated by the open/close valve drive mechanism 24d, the opening portion 24a of the extracting unit 24 is closed. On the other hand, when the open/close valve 24b is descended, the opening portion 24a is opened. Furthermore, the shaft 24c has a pipe-like or hollow shape so as to allow the air to flow therethrough.

The hot water pipe 25 has an upper end connected to a lower surface of the extracting unit 24 and the other end to which the hot water supplying nozzle 21 is attached. In addition, the hot water pipe 25 is provided with an extracting valve 25b comprising an automatic open/close valve. A combination of the water supplying nozzle 21 and the hot water pipe 25 will be referred to as a hot water feeding apparatus.

The hot water tank 22 serves to produce the hot water of about 90°C by the use of a heater (not shown) and to discharge a predetermined amount of hot water through a discharge pipe 27. The discharge pipe 27 has an end faced to the opening portion 24a of the extracting unit 24. The discharge pipe 27 is provided with a hot water supply valve 27a comprising an automatic open/close valve (an electromagnet valve or the like). A combination of the hot water tank 22 and the discharge pipe 27 will be referred to as a hot water supply apparatus.

The air pump 23 is connected to the shaft 24c of the extracting unit 24 through a flexible tube 28 to supply the air through the tube 28 and the shaft 24c into the extracting unit 24.

The cartridge 1 has an upper surface side allowing the insertion of the hot water supply nozzle 21 and a lower surface side formed by a liquid-permeable member such as a filter with the coffee grinds sealed in the cartridge. Thus, the cartridge serves to extract a single cup of coffee beverage. The coffee beverage extracted is poured into a cup 29.

The extract controller 26 comprises a microcomputer and is connected to the drive mechanism 24d, the extracting valve 25b, the hot water supply valve 27a, the air pump 23, the cartridge dispensing mechanism 31, the cartridge transfer mechanism 40, a timer 32, and a beverage concentration selecting unit 33 known in the art. The extract controller 26 will later be described in detail.

Referring to Fig. 9 in addition, the description will be continued further.

Below the hot water supply nozzle 21, the cartridge 1 is pushed upward by a vertical motion member 34. In this case, the vertical motion member 34 has a through hole 35 for allowing the passage of the beverage extracted from the bottom of the cartridge 1 and is vertically moved by a drive mechanism (not shown).

The hot water supply nozzle 21 is provided with an urging member or a coil spring 36 attached thereto to downwardly urge the cartridge 1. The spring 36 is arranged around the hot water supply nozzle 21. The spring 36 has an upper end fixed to a flange 37 attached to the hot water supply nozzle 21 and a lower end to which a contacting member 38 is attached to be brought into contact with the upper surface of the cartridge 1. The contacting member 38 is engaged with the hot water supply nozzle 21 to be movable in the vertical direction.

In the beverage extracting device 20 having the above-mentioned structure, the cup 29 is placed below the beverage extracting position. Then, the hot water supply valve 27a is opened to supply the hot water into the extracting unit 24. Next, the cartridge receiving table 41 holding the cartridge 1 is positioned at a beverage extracting position below the hot water supply nozzle 21. The cartridge 1 is elevated by the vertical motion member 34 so that the hot water supply nozzle 21 is inserted into the cartridge 1. Simultaneously, the open/close valve 24b of the extracting unit 24 is elevated by the open/close valve drive mechanism 24d to close the opening portion 24a of the extracting unit 24. Thereafter, the air pump 23 is operated to feed the air into the extracting unit 24 and to open the extracting valve 25b of the hot water pipe 25. Thus, the hot water is discharged from the hot water supply nozzle 21 into the cartridge 1 under the air pressure within the extracting unit 24 so that the coffee beverage is extracted from the bottom of the cartridge 1 to be poured into the cup 29. After the extraction of the coffee beverage is completed, the vertical motion member 34 descends the cartridge 1. The cartridge receiving table 41 holding the cartridge 1 is moved to an area above the waste cartridge receptacle 30. In this state, the cartridge 1 falls down from the cartridge receiving table 41 into the waste cartridge receptacle 30.

Upon insertion of the hot water supply nozzle 21 into the cartridge 1, the cartridge 1 is elevated by the vertical motion member 34. Consequently, the upper surface of the cartridge 1 is brought into contact with the contacting member 38 of the spring 36. Then, the contacting member 38 is elevated together with the cartridge 1 against an urging force of the spring 36. After the beverage is extracted from the cartridge 1, the vertical motion member 34 is moved down. In this event, since the cartridge 1 is urged downward by the spring 36, the cartridge 1 is reliably separated from the hot water supply nozzle 21 without being left inserted in the hot water supply nozzle 21. The cartridge 1 then moves down together with the vertical motion member 34 and held by the cartridge receiving table 41.

As described above, the cartridge 1 is urged downward by the spring 36 attached to the hot water supply nozzle 21. Consequently, the cartridge 1 can be reliably separated from the hot water supply nozzle 21 which has been inserted therein. Thus, the transferring operation of the cartridge 1 after extracting the beverage can be carried out without any trouble.

It is noted here that the vertical motion member 34 may be omitted and the cartridge receiving table 41 holding the cartridge 1 may be elevated. Furthermore, the hot water within the extracting unit 24 may be sucked by a fluid pump or the like to be discharged into the cartridge 1.

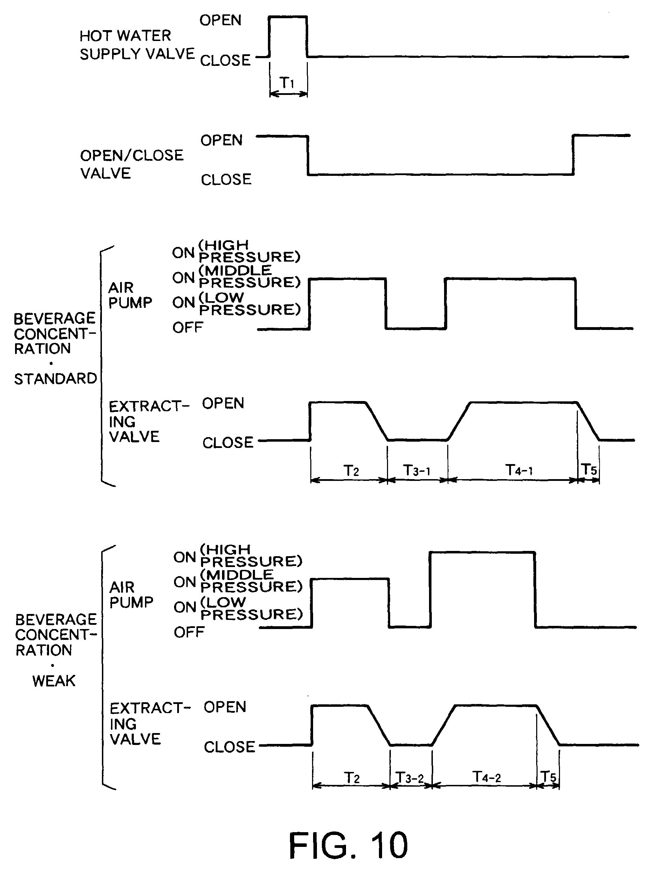

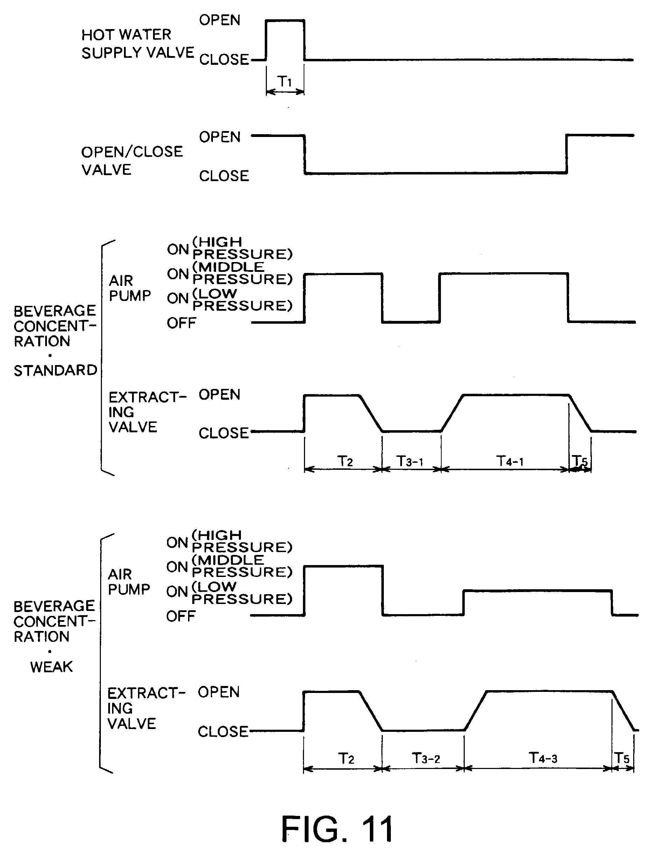

Next referring to Figs. 10 and 11 in addition to Figs. 7 and 8, the description will be made in detail about the extract controller 26.

The extract controller 26 controls the open/close valve drive mechanism 24d, the extracting valve 25b, the hot water supply valve 27a, and the air pump 23 in the following manner. Specifically, as shown in a time chart of Fig. 10, the hot water supply valve 27a is at first opened for a predetermined time duration T1 and the hot water valve 27a is closed. Simultaneously, the open/close valve 24b is closed by the open/close valve drive mechanism 24d and the air pump 23 is operated at a "middle pressure". The extracting valve 25b is opened for a predetermined time duration T2. Then, the air pump 23 is stopped. Thus, only the predetermined amount of the hot water is supplied into the cartridge 1.

The beverage concentration selecting unit 33 serves to select one of three levels of concentrations of the coffee beverages, i.e., "standard", "weak", and "strong".

In case where the "standard" is selected as the concentration of the beverage, the extracting valve 25b is opened and the air pump 23 is operated at the "middle pressure" after lapse of a predetermined steam duration T3-1. Then, after lapse of a predetermined hot water supply duration T4-1, the air pump 23 is stopped and the open/close valve 24b is opened. After lapse of a predetermined time duration T5, the extracting valve 25b is closed. Thus, the remainder of the hot water is supplied to the cartridge 1 so that the coffee beverage is extracted at the "standard" concentration.

In case where the "weak" is selected as the concentration of the beverage, the extracting valve 25b is opened and the air pump 23 is operated at a "high pressure" after lapse of a predetermined steam duration T3-2 shorter than the predetermined steam duration T3-1 corresponding to the "standard", as shown in Fig. 10. Then, after lapse of a predetermined hot water supply duration T4-2 shorter than the predetermined hot water supply duration T4-1 corresponding to the "standard", the air pump 23 is stopped and the open/close valve 24b is opened. After lapse of a predetermined time duration T5, the extracting valve 25b is closed. Thus, the hot water of a large flow rate per unit time is supplied in a short time to the cartridge 1 given a short steam duration so that the coffee beverage is extracted at the concentration lower than the "standard" concentration.

In case where the "strong" is selected as the concentration of the beverage, the extracting valve 25b is opened and the air pump 23 is operated at a "low pressure" after lapse of a predetermined steam duration T3-3 longer than the predetermined steam duration T3-1 corresponding to the "standard", as shown in Fig. 11. Then, after lapse of a predetermined hot water supply duration T4-3 longer than the predetermined hot water supply duration T4-1 corresponding to the "standard", the air pump 23 is stopped and the open/close valve 24b is opened. After lapse of a predetermined time duration T5, the extracting valve 25b is closed. Thus, the hot water of a small flow rate per time is supplied for a long time to the cartridge 1 given a long steam duration so that the coffee beverage is extracted at the concentration higher than "the standard" concentration.

As described above, the beverage is extracted at a variable concentration by controlling the steam duration of the cartridge 1, the flow rate of the hot water per unit time depending on a discharge pressure of the air pump 23, and a time duration required to supply the hot water. Accordingly, it is not necessary to dilute the beverage after extraction or to use a plurality of kinds of cartridges containing different amounts of the powdery material as a single cup quantity. It is therefore possible to efficiently and economically extract the coffee beverage having a desired concentration.

It is noted here that, in case where the beverage is extracted by a single supply of the hot water without steaming the material, the coffee beverages different in concentration can be extracted by controlling the flow rate of the hot water per unit time and a time duration required to supply the hot water in the manner similar to that described above.

In the manner described above, the extract controller 26 controls the hot water feeding apparatus to adjust a flow rate of the hot water per unit time. In this event, the extract controller 26 serves as a flow adjusting part. The extract controller 26 controls the hot water feeding apparatus to have a hot water supply time duration controlled to be shorter than a predetermined time duration when the flow rate is greater than a predetermined flow rate and to be longer than the predetermined time duration when the flow rate is smaller than the predetermined flow rate. In this event, the extract controller 26 serves as a time control part.

The extract controller 26 further controls the hot water feeding apparatus to have operation in which the hot water is supplied to the particular cartridge in a manner such that only a predetermined amount of the hot water is at first supplied to the particular cartridge and, after lapse of a particular time duration, the remainder of the hot water is supplied to the particular cartridge. In this event, the extract controller 26 serves as a feeding control part.

In addition, the extract controller 26 adjusts the particular time duration. In this event, the extract controller 26 serves as a time adjusting part. The extract controller 26 controls the feeding control part so that a flow rate of the hot water per unit time is greater than a predetermined rate and a hot water supply time duration is shorter than a predetermined time duration when the particular time duration is shorter than a predetermined time duration and that the flow rate is smaller than the predetermined rate and the hot water supply time duration is longer than the predetermined time duration when the particular time duration is longer than the predetermined time. In this event, the extract controller 26 serves as a time and flow control part.

## Claims

1. An automatic beverage vending machine comprising:
a beverage extracting position;
a plurality of cartridge storing portions each for storing a plurality of cartridges each of which contains a powdery beverage material therein;
a cartridge transferring mechanism coupled to said beverage extracting position and said cartridge storing portions for transferring, as a particular cartridge, one of said cartridges from said cartridge storing portions to said beverage extracting position; and
a beverage extracting device coupled to said beverage extracting position for supplying hot water into said particular cartridge to extract a beverage from said powdery beverage material.

2. An automatic beverage vending machine as claimed in claim 1, wherein said cartridge transfer mechanism comprises:
a cartridge receiving member for holding said particular cartridge;
an X-axis transfer mechanism connected to said cartridge receiving member for moving said cartridge receiving member in an X-axis direction on a horizontal plane; and
a Y-axis transfer mechanism connected to said cartridge receiving member for moving said cartridge receiving member on said horizontal plane in a Y-axis direction perpendicular to said X-axis direction.

3. An automatic beverage vending machine as claimed in claim 2, wherein said cartridge transfer mechanism further comprises an elevating mechanism connected to said cartridge receiving member for elevating said cartridge receiving member in a Z-axis direction perpendicular to said X-axis and said Y-axis directions.

4. An automatic beverage vending machine as claimed in claim 1, wherein said beverage extracting device comprises a nozzle for discharging said hot water therethrough, said nozzle being inserted into said particular cartridge to supply said hot water into said particular cartridge with said particular cartridge being moved towards a first direction.

5. An automatic beverage vending machine as claimed in claim 4, wherein said beverage extracting device further comprises an urging member connected to said nozzle for urging said particular cartridge towards a second direction opposite to said first direction.

6. An automatic beverage vending machine as claimed in claim 4, wherein said urging member comprises a coil spring disposed around said nozzle, said spring having one end fixed to said nozzle and the other end to be brought into contact with said cartridge.

7. An automatic beverage vending machine as claimed in claim 1, wherein said beverage extracting device comprises:
an extracting unit adapted to reserve hot water therein;
a hot water supply apparatus connected to said beverage extracting device for supplying said hot water to said extracting unit; and
a hot water feeding apparatus connected to said extracting unit for feeding said hot water from said extracting unit into said particular cartridge.

8. An automatic beverage vending machine as claimed in claim 7, wherein said beverage extracting device further comprises:
a flow adjusting part connected to said hot water feeding apparatus for controlling said hot water feeding apparatus to adjust a flow rate of said hot water per unit time; and
a time control part connected to said flow adjusting part and said hot water feeding apparatus for controlling said hot water feeding apparatus to have a hot water supply time duration controlled to be shorter than a predetermined time duration when said flow rate is greater than a predetermined flow rate and to be longer than the predetermined time duration when said flow rate is smaller than the predetermined flow rate.

9. An automatic beverage vending machine as claimed in claim 7, wherein said beverage extracting device further comprises a feeding control part connected to said hot water feeding apparatus for controlling said hot water feeding apparatus to have operation in which said hot water is supplied to said particular cartridge in a manner such that only a predetermined amount of said hot water is at first supplied to said particular cartridge and, after lapse of a particular time duration, the remainder of said hot water is supplied to said particular cartridge.

10. An automatic beverage vending machine as claimed in claim 9, wherein said beverage extracting device further comprises:
a time adjusting part connected to said feeding control part for adjusting said particular time duration; and
a time and flow control part connected to said time adjusting part and said feeding control part for controlling said feeding control part so that a flow rate of said hot water per unit time is greater than a predetermined rate and a hot water supply time duration is shorter than a predetermined time duration when said particular time duration is shorter than a predetermined time duration and that said flow rate is smaller than said predetermined rate and said hot water supply time duration is longer than said predetermined time duration when said particular time duration is longer than said predetermined time.
